# EUROPÄISCHE PATENTSCHRIFT

(11) **EP 2 310 720 B1**
(45) Veröffentlichungstag und Bekanntmachung des Hinweises auf die Patenterteilung: **19.09.2012**
(21) Anmeldenummer: 09772020.5
(22) Anmeldetag: 03.07.2009
(51) Int. Cl.: F16H 57/04, F16H 15/42

(54) **KEGELREIBRINGGETRIEBE**
CONICAL FRICTION RING TRANSMISSION
ENGRENAGE À ROUES CONIQUES ET ANNEAU DE FRICTION

(30) Priorität: 03.07.2008 DE 102008031226
(43) Veröffentlichungstag der Anmeldung: 20.04.2011
(73) Patentinhaber: Rohs, Ulrich, 52351 Düren (DE)
(72) Erfinder: Rohs, Ulrich, 52351 Düren (DE)
(74) Vertreter: Reuther, Martin
(86) Internationale Anmeldenummer: PCT/DE2009/000942
(87) Internationale Veröffentlichungsnummer: WO 2010/000250

(56) Entgegenhaltungen:
- EP-A- 0 361 347
- EP-A- 0 980 993
- EP-A- 1 635 090
- WO-A-2007/025522
- DE-A1- 10 303 891
- DE-A1- 10 348 718

## Beschreibung

Die Erfindung betrifft ein Kegelreibringgetriebe mit einer Schmiermittelpumpe.

Kegelreibringgetriebe sind aus der EP 0 878 641 A1 und aus der DE 103 03 896 A1 hinlänglich bekannt. Hierbei sind zwei Kegel gegensinnig aber achsenparallel zueinander angeordnet, wobei über eine axial verlagerbaren Reibring, der einen der Kegel umgreift und einen Spalt zwischen den beiden Kegeln überbrückt, ein Drehmoment übertragen werden kann. Zur Drehmomentübertragung kann ergänzend ein Traktionsfluid vorgesehen sein. Beispielsweise die WO 2007/025522 A2 offenbart diesbezüglich auch Möglichkeiten, das Traktionsfluid gezielt umzuwälzen bzw. gezielt an die für die Traktion, also den Drehmomentübertrag, wesentlichen Stellen zu bringen. Hierzu kann unter anderem auch eine Traktionsfluidpumpe vorgesehen sein

Andererseits besteht neben einer gezielten Umgehensweise mit dem Traktionsfluid auch bedarf, ein Schmiermittel an Stellen zu transportieren, an welchen ein entsprechendes Schmiermittel gebraucht wird. Dieses gilt insbesondere dann, wenn neben dem Schmiermittel auch ein Traktionsfluid zur Anwendung kommt. Hierzu offenbart beispielsweise die EP 0 980 993 A2 die Verwendung von ohnehin vorhandenen Kegelrollenlagern in einem Kegelreibringgetriebe als Schmiermittelpumpe, indem der Öldruck entsprechend genutzt wird, welchen derartige Kegelrollenlager einseitig aufbauen, wenn Sie geschmiert werden. Hierbei hat dieser Ansatz den Vorteil, dass zusätzlich Maßnahmen, wie beispielsweise eine elektrisch betriebene Schmiermittelpumpe, nicht notwendig sind. Insbesondere kann auf diese Weise ein an sich autarkes Kegelreibringgetriebe, also ein Kegelreibringgetriebe mit einer eigenen Schmiermittelpumpe, kostengünstig bereitgestellt werden.

Es ist Aufgabe vorliegender Erfindung, ein Kegelreibringgetriebe mit Schmiermittelpumpe bereitzustellen, bei welchem der durch die Schmiermittelpumpe bereitgestellte Öldruck leicht beherrscht werden kann.

Als Lösung schlägt die Erfindung ein Kegelreibringgetriebe mit den Merkmalen des Anspruchs 1 vor.

Bei einer Strömungsmaschine lässt sich ein Schmiermitteldruck leicht beherrschen, da letztlich lediglich verhältnismäßig geringe Drücke auftreten. Etwaige Verluste, die bei Strömungsmaschinen im Vergleich zu Verdrängungsmaschinen, welche als Pumpen genutzt werden könnten, zu finden sind, können dadurch minimiert werden, dass auf Maßnahmen zur Beherrschung des Öldrucks, wie beispielsweise Überdruckventile und ähnliches verzichtet werden kann. Insbesondere kann, gegebenenfalls, auch auf eine separate Ansteuerung der Strömungsmaschine, beispielsweise eine entsprechende Strom- oder Spannungsregelung, verzichtet werden.

Dadurch, dass ein Schmiermittelteilstrom der Strömungsmaschine für die Schmiermittelversorgung des Kegelreibringgetriebes abgegriffen wird, verbleibt ein Reststrom in der Strömungsmaschine, sodass die Strömungsmaschine einer variablen Schmiermittelentnahme flexibel begegnen kann. Dieses kann insbesondere dadurch erfolgen, dass in der Strömungsmaschine gegebenenfalls in den übrigen Teilströmen, also in den Schmiermittelteilströmen, die nicht für die Schmiermittelversorgung abgegriffen werden, ein höherer Druck vorhanden ist bzw. die Strömungsgeschwindigkeit entsprechend ansteigt, wenn weniger Schmiermittel abgegriffen wird.

Die Strömungsmaschine kann einen Schmiermittelsumpf aufweisen, den ein Läufer der Strömungsmaschine durchläuft. Auf diese Weise erzeugt die Strömungsmaschine in dem Schmiermittelsumpf eine Strömung, deren Strömungsdruck entsprechend genutzt werden kann bzw. von welcher ein Schmiermittelteilstrom abgegriffen werden kann.

Es wird ein Strömungsdruck, den das Zahnrad aufbaut, wenn es einen Schmiermittelsumpf durchläuft, entsprechend genutzt.

Es ist möglich, dass ein ohnehin in dem Kegelreibringgetriebe vorhandenes Zahnrad, welches letztlich auch anderen Zwecken dient, genutzt wird. Hierbei bietet sich insbesondere das Tellerrad eines Differentials an, welches in der Regel bei einem Kegelreibringgetriebe den Kegeln nachgeschaltet ist. Ein derartiges Differential liegt üblicherweise am tiefsten Punkt eines Kraftfahrzeuges und sollte ohnehin ständig mit Schmiermittel in Kontakt sein. Darüber hinaus ist das Tellerrad eines Differentials verhältnismäßig breit, da dort die höchsten Drehmomente auftreten. Dementsprechend ist durch das Tellerrad auch eine entsprechend große Fördermenge an Schmiermittel möglich. Darüber hinaus ist im Bereich des Differentials ein Gehäuse, sei es das Gehäuse des Kegelreibringgetriebes, wenn dieses das Differential unmittelbar mit umschließt oder sei es ein separates Gehäuse des Differentials, verhältnismäßig frei gestaltbar, da in dem Bereich um das Differential nur wenige andere Aggregate zu finden sind.

Vorzugsweise ist die Strömungsmaschine bzw. das Zahnrad über eine Antriebswelle des Kegelreibringgetriebes angetrieben. Auf diese Weise kann auf eine separate Stromversorgung oder auf sonstige Energieversorgungen der Schmiermittelpumpe verzichtet werden. Insbesondere ist es möglich, das Getriebe als kompakte Baueinheit einschließlich einer Schmiermittelpumpe anzuliefern, ohne dass eine nennenswerte Energiezufuhr bzw. separate Schmiermittelanschlüsse vorgesehen sein müssen. Da letztlich in einem Kraftfahrzeug, für welches ein derartiges Kegelreibringgetriebe in der Regel zur Anwendung kommt, sämtliche Energie ohnehin aus dem Antriebsmotor bereitgestellt wird, können auf diese Weise etwaige Verluste bei geeigneter Ausgestaltung insgesamt minimiert werden.

Insbesondere kann das Zahnrad bzw. die Strömungsmaschine über einen Ausgangskegel des Kegelreibringgetriebes angetrieben werden. In der Regel ist im Bereich eines Abtriebs bzw. im Bereich des Ausgangskegels etwas mehr Bauraum vorhanden, um die notwendigen Aggregate, wie beispielsweise einen Schmiermittelsumpf und Zu- und Ableitungen, vorsehen zu können. Insbesondere bei der Verwendung einer Strömungsmaschine spielen die möglicherweise hohen Drehzahlunterschiede, wie sie an einem Kegelreibringgetriebeabtrieb auftreten können eine nicht so wesentliche Rolle, da eine Strömungsmaschine diesbezüglich verhältnismäßig tolerant ist.

Die vorliegende Erfindung eignet sich insbesondere für Kegelreibringgetriebe, welche zwei getrennte Fluidräume aufweisen, von denen ein erster Fluidraum Traktionsfluid und ein zweiter Fluidraum Schmiermittel enthält. Bei einer derartigen Anordnung ist die Schmiermittelmenge verhältnismäßig gering, sodass bereits geringe Druckunterschiede ausreichen, um die benötigte Schmiermittelmenge bereitzustellen.

Letzteres gilt insbesondere ein Verbindung mit einem Kegelreibringgetriebe, bei welchem die Lager lediglich einer Lagerseite der Reibkegel, welche in der Regel jeweils über zwei jeweils beidseits des jeweiligen Kegels angeordnete Lager gelagert sind, gegenüber dem Traktionsfluid enthaltenden Fluidraum abgedichtet sind. Diese gegenüber dem Traktionsfluid enthaltenden Fluidraum abgedichteten Lager können dann ohne weiteres von der erfindungsgemäßen Schmiermittelpumpe mit Schmiermittel versorgt werden, wobei die Schmiermittelmenge, insbesondere wenn diese Lager in der Nähe der Schmiermittelpumpe vorgesehen sind, was beispielsweise durch die Anordnung der Schmiermittelpumpe auf derselben Seite des Kegelreibringgetriebes wie die entsprechenden Lager ohne Weiteres geschehen kann, noch weiter reduziert werden kann. Letztere Anordnung eignet sich insbesondere dann wenn als Traktionsfluid Naphtenöl zur Anwendung kommt, welches durchaus die anderen Lager, die nicht gegenüber dem Traktionsfluid enthaltenden Fluidraum abgedichtet sind, aus schmieren und kann und dennoch genügend Traktion bereitstellt.

Vorzugsweise weist die Schmiermittelpumpe einen Schmierölsumpf und wenigstens eine Zuflusssteuerung zu dem Schmierölsumpf auf. Eine derartige Ausgestaltung ermöglicht es, einfach und betriebssicher die Förderleistung der Schmiermittelpumpe zu regulieren, indem letztlich die Schmiermittelmenge, welche der Schmiermittelpumpe zum Fördern bereitgestellt wird, den Erfordernissen angepasst wird. Insbesondere im Zusammenspiel mit einer Strömungsmaschine ist eine derartige Ausgestaltung von Vorteil, da Strömungsmaschinen bei fehlendem Medium, welches gefördert werden soll, sich friedlich verhalten und letztlich lediglich entsprechend weniger Medium fördern. Darüber hinaus hat eine derartige Ausgestaltung den Vorteil, dass die Strömungsmaschinen nicht zwingend gegen einen hohen Schmiermitteldruck arbeiten muss, wenn eine geringere Förderleistung notwendig ist. Durch eine Reduktion des Zuflusses folgt vielmehr eine geringere Belastung der Strömungsmaschinen, sodass Verluste minimiert werden können.

Vorzugsweise wird das Schmiermittel in einem Kreislauf, insbesondere durch die Zuflusssteuerung und den Schmierölsumpf sowie durch die Schmiermittelpumpe zu den zu schmierenden Baugruppen und von diesen Baugruppen zu der Zuflusssteuerung zurückgefördert. Ein derartig geschlossener Kreislauf ermöglicht insbesondere eine autarke Bereitstellung des Kegelreibringgetriebes, sodass dieses auf ergänzende Anschlüsse, insbesondere an einen externen Schmiermittelkreislauf, möglichst verzichten kann.

Der Schmiermittelkreislauf kann besonders klein ausgebildet bzw. besonders wenig Schmiermittel enthaltend ausgebildet werden, wenn - wie bereits vorstehend erläutert - die Lager lediglich einer Lagerseite der Reibkegel, welche in der Regel jeweils über zwei jeweils beidseits des jeweiligen Kegels angeordnete Lager gelagert sind, gegenüber dem Traktionsfluid enthaltenden Fluidraum abgedichtet sind. Die anderen Lager brauchen dann nicht in den Schmiermittelkreislauf mit einbezogen werden.

Die Schmiermittelpumpe kann einen Antrieb, der in Abhängigkeit von einem Betriebszustand des Kegelreibringgetriebes seine Drehrichtung ändert, und zwei richtungsabhängige mit Schmiermitteldruck beaufschlagte Schmiermittelausgänge aufweisen, sodass die Schmiermittelpumpe unabhängig von der Drehrichtung Schmiermittel fördern kann. Insofern ist es möglich, die Schmiermittelpumpe ohne Weiteres hinter einem Rückwärtsgang, insbesondere also beispielsweise am Differential eines Kraftfahrzeugs, vorzusehen und sicherzustellen, dass unabhängig von der Drehrichtung ein Schmiermitteldruck zur Verfügung gestellt wird, der zur Verteilung des Schmiermittels genutzt werden kann.

Es versteht sich, dass die vorliegende Erfindung nicht auf Kegelreibringgetriebe, wie sie als Stand der Technik in der Einleitung beschrieben sind, beschränkt ist. Vielmehr ist vorliegende Erfindung auch für andere Kegelreibringgetriebe, beispielsweise mit mehreren Ringen, mit Ringen, die beide Kegel umschlingen, oder mit nicht achsparallel angeordneten Kegeln und ähnlichem, anwendbar.

Weitere Vorteile, Ziele und Eigenschaften vorliegender Erfindung werden in der nachfolgenden Beschreibung anliegender Zeichnung erläutert. In der Zeichnung zeigen:
- Figur 1: eine schematische Darstellung eines erfindungsgemäßen Kegelreibringgetriebes mit Schmiermittelpumpe;
- Figur 2: eine Detaildarstellung des Tellerrades des Differentials des Kegelreibringgetriebes nach Fig. 1 zur Ausgestaltung als Schmiermittelpumpe;
- Figur 3: einen teilweise aufgebrochenen Schnitt durch das Differential des Kegelreibringgetriebes nach Fig. 1 entlang der Linie III-III in Figur 2;
- Figur 4: eine perspektivische Darstellung eines Schmiermittelausgangs für die Schmiermittelpumpe des Kegelreibringgetriebes nach Figuren 1 bis 3; und
- Figur 5: eine perspektivische Darstellung eines alternativen Schmiermittelausgangs für die Schmiermittelpumpe des Kegelreibringgetriebes nach Figuren 1 bis 3.

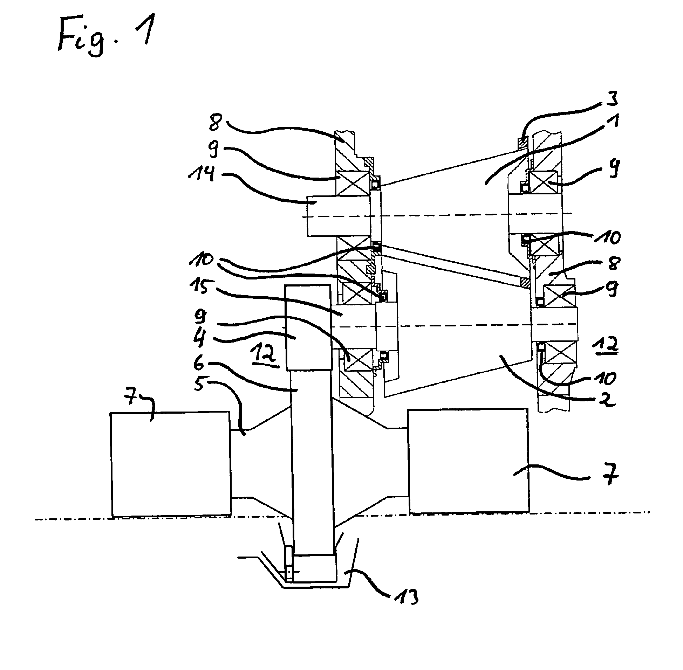

Das in Figur 1 dargestellte Kegelreibringgetriebe weist einen Eingangskegel 1, einen Ausgangskegel 2 und einen Reibring 3, der in einem zwischen den beiden Kegeln 1, 2 angeordneten Spalt verlagerbar ist und den Eingangskegel 1 umgreift, sowie ein Ausgangsritzel 4 und ein Differential 5 auf, welches über ein Tellerrad 6 mit dem Ausgangsritzel 4 in Wirkverbindung steht und zwei Räder 7 (lediglich schematisch angedeutet) in an sich bekannter Weise antreibt.

Das Kegekeibringgetriebe aus Eingangskegel 1, Ausgangskegel 2, Reibring 3, Ausgangsritzel 4 und Differential 5 ist von einem Gehäuse 13 (nur teilweise schematisch dargestellt) umgeben und an sich in bekannter Weise dort gelagert. Insbesondere sind in dem Gehäuse 13 zwei Gestelle 8 vorgesehen, welche einerseits die durch den Eingangskegel 1, den Ausgangskegel 2 und den Reibring 3 bedingten Kräfte über Lager 9 aufnehmen und somit die Übertragung von Drehmomenten ermöglichen sowie andererseits Dichtungen 10 tragen, sodass innerhalb des Gehäuses zwei getrennte Fluidräume, ein Traktionsfluidraum 11 und ein Schmiermittelraum 12 (lediglich schematisch angedeutet), in dem Gehäuse 13 bereitgestellt werden.

Im Betrieb wird Drehmoment über eine Antriebswelle 14 auf den Eingangskegel 1 übertragen. Entsprechend der Position des Reibringes 3 wird das Drehmoment auf den Ausgangskegel 2, welcher, je nach Lage des Reibringes 3, mit einer entsprechenden Drehzahl rotiert, und über dessen Ausgangswelle 15 auf das Ausgangsritzel 4 und zu dem Differential 5 übertragen. Nicht dargestellt ist ein Rückwärtsgang, der letztlich eingangswellenseitig bzw. ausgangswellenseitig in an sich bekannter Weise vorgesehen sein kann. Während im Traktionsfluidraum 11 ein Traktionsfluid dafür sorgt, dass zwischen den Kegeln 1, 2 und dem Reibring 3 eine ausreichende Traktion zur Übertragung eines Drehmoments vorhanden ist, sorgt ein Schmiermittel, vorzugsweise Öl, im Schmiermittelraum 12 für eine ausreichende Kühlung sowie möglichst geringe Reibungsverluste.

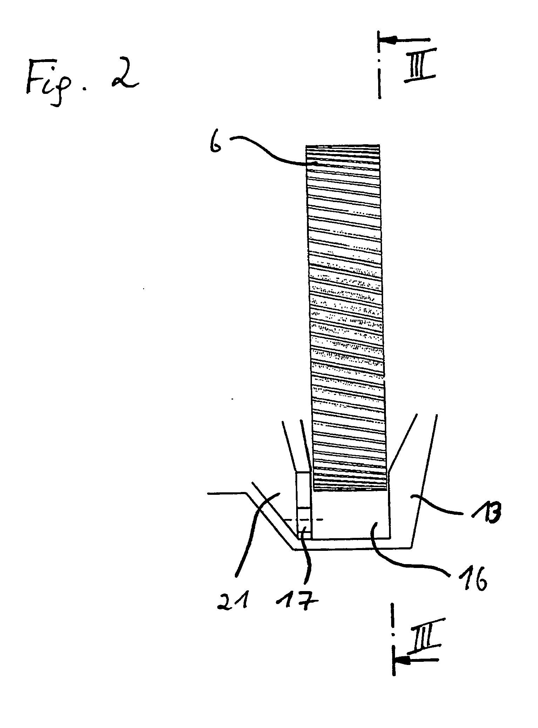

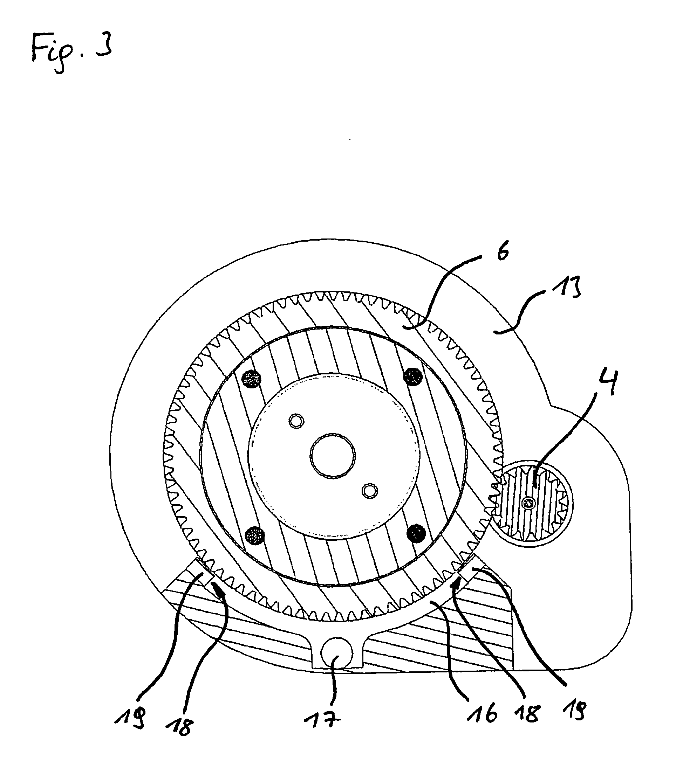

Wie insbesondere in Figuren 2 und 3 ersichtlich, ist das Tellerrad 6 bis auf einen Schmiermittelsumpf 16 verhältnismäßig eng von dem Gehäuse 13 umschlossen, wobei es sich versteht, dass das Gehäuse 13 nicht zwingend einstückig sondern auch aus mehreren Baugruppen bestehen kann.

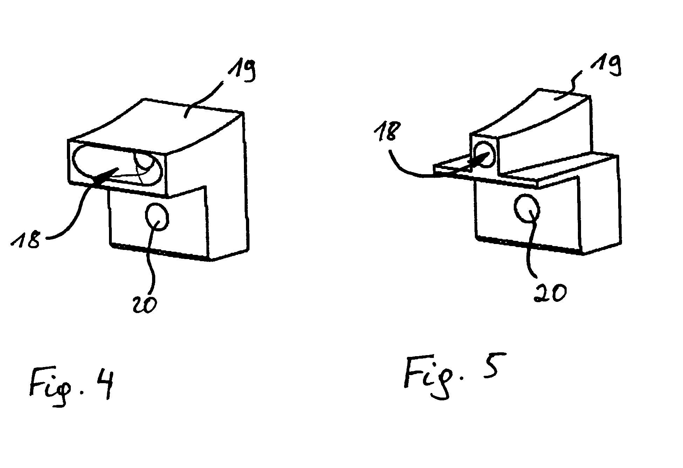

Der Schmiermittelsumpf 16 weist einen Schmiermitteleingang 17 auf, welcher an der tiefsten Stelle des Kegelreibringgetriebes angeordnet ist. Darüber hinaus sind in Umfangsrichtung des Tellerrades 6, ein wenig von dem Schmiermitteleingang 17 beabstandet zwei Schmiermittelausgänge 18 vorgesehen, die in Formsteinen 19 (siehe Figuren 4 und 5) als Öffnungen ausgebildet sind. Durch die Ausgestaltung der Schmiermittelausgänge 18 in Formsteinen 19 kann die Menge und der Druck des Schmiermittels, welches von dem Tellerrad 6 durch den jeweiligen Schmiermittelausgang 18 gefördert wird, verhältnismäßig einfach an individuelle Erfordernisse eines bestimmten Getriebes oder eines bestimmten Kraftfahrzeuges angepasst werden. Die Formsteine 19 weisen darüber hinaus eine Befestigungsöffnung 20 auf, über welche die Formsteine 19 an dem Gehäuse 13 schnelle und einfach befestigt werden können.

Es versteht sich, dass durch eine geeignete Ausgestaltung der Formsteine 19 bzw. der Schmiermittelausgänge 18 die Strömungsverhältnisse in geeigneter Weise beeinflusst werden können. Insbesondere kann auch ein leichtes Vorbeiströmen des Schmiermittels, auch auf radialer Höhe des Schmiermittelausgangs 18 (siehe Figur 5), beabsichtigt sein, indem der entsprechende Formstein 19 seitliche Flanken aufweist, an denen dieses möglich ist.

Es ist unmittelbar ersichtlich, dass bei einer Drehrichtungsumkehr des Tellerrades 6, wie dieses beispielsweise beim Einlegen eines Rückwärtsgangs erfolgt, die durch das Tellerrad 6 gebildete Schmiermittelpumpe ebenfalls Schmiermittel fördern kann.

Dem Schmiermitteleingang 17 wird das Schmiermittel über einen Zufluss 21 aufgegeben, wobei es sich versteht, dass die Förderleistung der durch das Tellerrad 6 gebildeten Schmiermittelpumpe von der Schmiermittelmenge abhängt, welche über den Zufluss 21 dem Schmiermittelsumpf 16 zur Verfügung gestellt wird. Durch eine entsprechende Zuflusssteuerung kann mithin die Förderleistung ohne weiteres gesteuert bzw. geregelt werden, wobei unmittelbar nachvollziehbar ist, dass bei einer geringeren Zuflussmenge die Verluste welche das Tellerrad 6 durch die Strömungsprozesse in dem Schmiermittelsumpf 16 erfährt, minimiert werden.

Wie unmittelbar ersichtlich, ist es ohne Weiteres möglich, den Schmiermittelkreislauf wesentlich zu vereinfachen, wenn auf die Dichtungen 10, welche sich auf der Seite der Seite der Kegel 1, 2, welche dem Tellerrad 6 abgewandt ist, befinden, verzichtet wird. Hierdurch wird der in der Figur 1 rechts liegende Raum, der bei dem vorstehend erläuterten Ausführungsbeispiel auch Schmiermittelraum 12 ist, zu einem Traktionsfluidraum 11. Dieses ist besonders dann realisierbar, wenn Naphtenöl als Traktionsfluid zur Anwendung kommt, da sich überraschender Weise herausgestellt hat, dass Naphtenöl unter Umständen auch ausreichend schmierende Eigenschaften aufweist. Auch wenn die schmierenden Eigenschaften möglicherweise schlechter als andere Schmiermittel sind, bedeutet der Verzicht auf die entsprechenden Dichtungen andererseits eine entsprechende Reduktion an Reibungsverlusten.

### Bezugszeichenliste:

- 1: Eingangskegel
- 2: Ausgangskegel
- 3: Reibring
- 4: Ausgangsritzel
- 5: Differential
- 6: Tellerrad
- 7: Rad
- 8: Gestell
- 9: Lager
- 10: Dichtung
- 11: Traktionsfluidraum
- 12: Schmiermittelraum
- 13: Gehäuse
- 14: Eingangswelle
- 15: Ausgangswelle
- 16: Schmiermittelsumpf
- 17: Schmiermitteleingang
- 18: Schmiermittelausgang
- 19: Formstein
- 20: Befestigungsöffnung
- 21: Zufluss

## Patentansprüche

1. Kegelreibringgetriebe mit einer Strömungsmaschine als Schmiermittelpumpe, wobei ein Schmiermittelteilstrom der Strömungsmaschine für eine Schmiermittelversorgung des Kegelreibringgetriebes abgegriffen wird,**dadurch gekennzeichnet, dass** ein mit Schmiermittel benetztes Zahnrad als die zuvor genannte Schmiermittelpumpe genutzt wird.

2. Kegelreibringgetriebe nach Anspruch 1, **dadurch gekennzeichnet, dass** die Strömungsmaschine einen Schmiermittelsumpf (16) aufweist, den das Zahnrad als der Strömungsmaschine durchläuft.

3. Kegelreibringgetriebe nach einem der vorstehenden Ansprüche, **dadurch gekennzeichnet, dass** die Strömungsmaschine über eine Antriebswelle (14) des Kegelreibringgetriebes mechanisch angetrieben wird.

4. Kegelreibringgetriebe nach nach einem der vorstehenden Ansprüche, **dadurch gekennzeichnet, dass** das Zahnrad das Tellerrad (6) eines Differentials (5) ist.

5. Kegelreibringgetriebe nach nach einem der vorstehenden Ansprüche, **dadurch gekennzeichnet, dass** das Zahnrad über eine Antriebswelle (14) des Kegelreibringgetriebes angetrieben wird.

6. Kegelreibringgetriebe nach Anspruch 5, **dadurch gekennzeichnet, dass** das Zahnrad über einen Ausgangskegel (2) des Kegelreibringgetriebes angetrieben wird.

7. Kegelreibringgetriebe nach einem der vorstehenden Ansprüche, **dadurch gekennzeichnet, dass** das Kegelreibringgetriebe zwei getrennte Fluidräume (11, 12) aufweist, von denen ein erster Traktionsfluid und ein zweiter Schmiermittel enthält.

8. Kegelreibringgetriebe nach einem der vorstehenden Ansprüche, **dadurch gekennzeichnet, dass** die Schmiermittelpumpe einen Schmierölsumpf (16) und wenigstens eine Zuflusssteuerung zu dem Schmierölsumpf (16) aufweist.

9. Kegelreibringgetriebe nach Anspruch 8. **dadurch gekennzeichnet, dass** das Schmiermittel in einem Kreislauf durch die Zuflusssteuerung und den Schmierölsumpf (16) sowie die Schmiermittelpumpe zu zu schmierenden Baugruppen und von diesen zu schmierenden Baugruppen zu der Zuflusssteuerung gefördert wird.

10. Kegelreibringgetriebe nach einem der vorstehenden Ansprüche, **dadurch gekennzeichnet, dass** die Schmiermittelpumpe einen Antrieb, der in Abhängigkeit von einem Betriebszustand des Kegelreibringgetriebes seine Drehrichtung ändert, und zwei richtungsabhängig mit Schmiermitteldruck beaufschlagte Schmiermittelausgänge (18) aufweist.

11. Kegelreibringgetriebe nach einem der vorstehenden Ansprüche, **dadurch gekennzeichnet, dass** als Traktionsfluid Naphtenöl zur Anwendung kommt.

## Claims

1. A cone and ring gear box with a turbomachine as lubricant pump, wherein a lubricant partial flow of the turbomachine is tapped for a lubricant supply of the cone and ring gear box, **characterised in that** a gear wheel wetted with lubricant is used as the previously mentioned lubricant pump.

2. The cone and ring gear box according to Claim 1, **characterised in that** the turbomachine has a lubricant sump (16) through which the gear wheel runs as impeller of the turbomachine.

3. The cone and ring gear box according to one of the preceding claims, **characterised in that** the turbomachine is mechanically driven via a drive shaft (14) of the cone and ring gear box.

4. The cone and ring gear box according to one of the preceding claims, **characterised in that** the gear wheel is the crown gear (6) of a differential gear (5).

5. The cone and ring gear box according to one of the preceding claims, **characterised in that** the gear wheel is driven via a drive shaft (14) of the cone and ring gear box.

6. The cone and ring gear box according to Claim 5, **characterised in that** the gear wheel is driven via an output cone (2) of the cone and ring gear box.

7. The cone and ring gear box according to one of the preceding claims, **characterised in that** the cone and ring gear box has two separated fluid spaces (11, 12), of which a first contains traction fluid and a second contains lubricant.

8. The cone and ring gear box according to one of the preceding claims, **characterised in that** the lubricant pump has a lubricating-oil sump (16) and at least one inflow control for the lubricating-oil sump (16).

9. The cone and ring gear box according to Claim 8, **characterised in that** the lubricant is delivered by the inflow control and the lubricating oil sump (16) as well as the lubricant pump to modules to be lubricated and from the same modules to be lubricated to the inflow control.

10. The cone and ring gear box according to one of the preceding claims, **characterised in that** the lubricant pump has a drive, which changes its direction of rotation as a function of an operating state of the cone and ring gear box, and two lubricant outputs (18) loaded with lubricant pressure as a function of direction.

11. The cone and ring gear box according to one of the preceding claims, **characterised in that** naphthenic oil is used as traction fluid.

## Revendications

1. Engrenage à roues coniques et anneau de friction équipé d'une machine d'écoulement comme pompe à lubrifiant, un flux partiel de lubrifiant de la machine d'écoulement étant prélevé pour une alimentation en lubrifiant de l'engrenage, **caractérisé en ce qu'**une roue dentée humectée avec du lubrifiant est utilisée comme la pompe à lubrifiant citée plus haut.

2. Engrenage à roues coniques et anneau de friction selon la revendication 1, **caractérisé en ce que** la machine d'écoulement présente une cuve à lubrifiant (16), que traverse la roue dentée en tant que rotor de la machine d'écoulement.

3. Engrenage à roues coniques et anneau de friction selon l'une des revendications précédentes, **caractérisé en ce que** la machine d'écoulement est entraînée mécaniquement au moyen d'un arbre d'entraînement (14) de l'engrenage à roues coniques et anneau de friction.

4. Engrenage à roues coniques et anneau de friction selon l'une des revendications précédentes, **caractérisé en ce que** la roue dentée est la couronne (6) d'un différentiel (1).

5. Engrenage à roues coniques et anneau de friction selon l'une des revendications précédentes, **caractérisé en ce que** la roue dentée est entraînée au moyen d'un arbre d'entraînement (14) de l'engrenage.

6. Engrenage à roues coniques et anneau de friction selon la revendication 5, **caractérisé en ce que** la roue dentée est entraînée au moyen d'une couronne de sortie (2) de l'engrenage.

7. Engrenage à roues coniques et anneau de friction selon l'une des revendications précédentes, **caractérisé en ce que** l'engrenage à roues coniques et anneau de friction présente deux espaces de fluide (11, 12) séparés, dont un premier contient du fluide de traction et un second du lubrifiant.

8. Engrenage à roues coniques et anneau de friction selon l'une des revendications précédentes, **caractérisé en ce que** la pompe à lubrifiant présente une cuve d'huile lubrifiante (16) et au moins une commande d'arrivée à la cuve d'huile lubrifiante (16).

9. Engrenage à roues coniques et anneau de friction selon la revendication 8, **caractérisé en ce que** le lubrifiant est transporté dans un circuit par la commande d'arrivée et la cuve d'huile lubrifiante (16) et la pompe à lubrifiant à des ensembles à lubrifier et de ces ensembles à lubrifier à la commande d'arrivée.

10. Engrenage à roues coniques et anneau de friction selon l'une des revendications précédentes, **caractérisé en ce que** la pompe à lubrifiant présente un entraînement, qui modifie son sens de rotation en fonction d'un état de service de l'engrenage, et deux sorties de lubrifiant (18) alimentées en fonction de la direction avec de la pression de lubrifiant.

11. Engrenage à roues coniques et anneau de friction selon l'une des revendications précédentes, **caractérisé en ce que** de l'huile de naphtène est utilisée comme fluide de traction.
